# EUROPEAN PATENT APPLICATION

(11) **EP 4 748 599 A1**
(43) Date of publication of application: **27.05.2026**
(21) Application number: 24853878.7
(22) Date of filing: 16.08.2024
(51) Int. Cl.: B60H 1/34

(54) **VEHICLE AIR CONDITIONING AIR DISTRIBUTION DEVICE AND VEHICLE**

(30) Priority: 17.08.2023 CN 202311043526
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: PENG, Changbo, Ningbo, Zhejiang 315899 (CN); CHEN, Chong, Ningbo, Zhejiang 315899 (CN); LI, Yongfeng, Ningbo, Zhejiang 315899 (CN); CHEN, Guang, Ningbo, Zhejiang 315899 (CN); XU, Hua, Ningbo, Zhejiang 315899 (CN); JIANG, Xiaoyuan, Ningbo, Zhejiang 315899 (CN)
(74) Representative: Michalski Hüttermann & Partner Patentanwälte mbB
(86) International application number: PCT/CN2024/112623
(87) International publication number: WO 2025/036473

(57) **Abstract**

Disclosed are an air distribution apparatus for a vehicle air-conditioner and a vehicle. The air distribution apparatus (10) for the vehicle air-conditioner includes a housing (11) and an air distribution assembly (144). The housing (11) includes an air inlet side (14), an air outlet side (15), and an air cavity (16). The air inlet side (14) is provided with an air inlet (17), the air inlet (17) includes a first air inlet (18) and a second air inlet (19), the first air inlet (18) is configured to place the air cavity (16) in communication with a cold air inlet area, and the second air inlet (19) is configured to place the air cavity (16) in communication with a hot air inlet area. The air distribution assembly (144) is disposed at the air inlet side (14). The air distribution assembly (144) includes an air baffle (145) and an air baffle drive portion (146). The air baffle (145) is disposed at the air inlet (17) and is movably connected to the air baffle drive portion (146) in a linear direction (X). The air baffle (145) is movably switchable between a first position and a second position. When the air baffle (145) is in the first position, the air baffle (145) completely blocks the first air inlet (18). When the air baffle (145) is in the second position, the air baffle (145) completely bocks the second air inlet (19).

## Description

### CROSS-REFERENCE TO RELATED APPLICATIONS

The present disclosure claims priority to Chinese Patent Application No. 202311043526.3, filed on August 17, 2023, which is incorporated herein by reference in its entirety.

### TECHNICAL FIELD

The present disclosure relates to, but is not limited to, the field of air conditioning technologies, and in particular, to an air distribution apparatus for a vehicle air-conditioner and a vehicle.

### BACKGROUND

A vehicle is usually equipped with an air-conditioner, which is configured to implement at least one function such as heating, cooling, defrosting, and air change inside the vehicle. The air-conditioner usually includes an air distribution apparatus, which can bring air at a certain temperature and humidity level to the interior of the vehicle to satisfy the requirements for the comfort of the interior of the vehicle.

### SUMMARY

The following is a brief summary of subject matter described in detail herein. This summary is not intended to be limiting as to the scope of the claims.

The present disclosure provides an air distribution apparatus for a vehicle air-conditioner and a vehicle.

The present disclosure provides an air distribution apparatus for a vehicle air-conditioner, including: a housing, including an air inlet side, an air outlet side, and an air cavity, wherein the air inlet side is provided with an air inlet, the air inlet includes a first air inlet and a second air inlet, the first air inlet is configured to communicate the air cavity with a cold air inlet area, and the second air inlet is configured to communicate the air cavity with a hot air inlet area; and an air distribution assembly, disposed at the air inlet side, wherein the air distribution assembly includes an air baffle and an air baffle drive portion, and the air baffle is disposed at the air inlet and movably connected to the air baffle drive portion in a linear direction. The air baffle is movably switchable between a first position and a second position, and when the air baffle is in the first position, the air baffle completely blocks the first air inlet; and when the air baffle is in the second position, the air baffle completely blocks the second air inlet.

Optionally, the air baffle is provided with a rack on a surface thereof, and the rack extends in the linear direction. The air baffle drive portion includes an extension rod and a gear, the extension rod extends in a horizontal direction perpendicular to the linear direction, and the gear is disposed on the extension rod and is in mating connection with the rack.

Optionally, the air outlet side is provided with a plurality of air outlets, and the plurality of air outlets include a plurality of front air outlets and a plurality of rear air outlets. The plurality of front air outlets are configured to deliver air to a front row inside a vehicle, and the plurality of rear air outlets are configured to deliver the air to a rear row inside the vehicle. The air cavity includes a front air cavity and a rear air cavity that are disposed separately from each other, the front air cavity is in communication with the plurality of front air outlets and the air inlet, and the rear air cavity is in communication with the plurality of rear air outlets and the air inlet; and the air baffle includes a front air baffle and a rear air baffle, the front air baffle is disposed at a position of the air inlet corresponding to the front air cavity, and the rear air baffle is disposed at a position of the air inlet corresponding to the rear air cavity.

Optionally, the air distribution assembly further includes an air distribution drive structure, and the air distribution drive structure includes an output end connected to the air baffle drive portion to drive the air baffle drive portion to rotate. The air baffle drive portion includes a left front air baffle drive portion and a right front air baffle drive portion. The air distribution drive structure includes two first air distribution drive structures, and the two first air distribution drive structures include output ends respectively connected to the left front air baffle drive portion and the right front air baffle drive portion to drive the left front air baffle drive portion and the right front air baffle drive portion to rotate.

Optionally, the air distribution assembly further includes an air distribution drive structure, and the air distribution drive structure includes an output end connected to the air baffle drive portion, to drive the air baffle drive portion to rotate. The air baffle drive portion includes a left rear air baffle drive portion and a right rear air baffle drive portion. The air distribution drive structure includes a second air distribution drive structure and an air distribution transmission structure, the air distribution transmission structure is connected to the left rear air baffle drive portion and the right rear air baffle drive portion, and the second air distribution drive structure includes an output end is connected to one of the left rear air baffle drive portion and the right rear air baffle drive portion.

Optionally, the air distribution transmission structure includes a transmission rod and at least two mating gears, the transmission rod extends along the horizontal direction, and the at least two mating gears are distributed on the transmission rod along the horizontal direction. At least one of the at least two mating gears is in mating connection with a gear of the left rear air baffle drive portion, and the rest of the at least two mating gears is in mating connection with a gear of the right rear air baffle drive portion.

Optionally, the air distribution assembly further includes a first gear set and a second gear set. The air baffle drive portion includes a front air baffle drive portion and a rear air baffle drive portion. The first gear set is connected to the front air baffle drive portion and is configured to drive the front air baffle drive portion to rotate. The second gear set is connected to the rear air baffle drive portion and is configured to drive the rear air baffle drive portion to rotate.

Optionally, the rear air baffle drive portion includes a hollow interior, and the front air baffle drive portion passes through the rear air baffle driving portion and is connected to the first gear set.

Optionally, the first gear set and the second gear set are arranged in a staggered manner along the horizontal direction.

Optionally, the air distribution apparatus for the vehicle air-conditioner further includes a controller. The air distribution assembly further includes an air distribution drive structure, and the air distribution drive structure includes an output end connected to the air baffle drive portion, to drive the air baffle drive portion to rotate. The air distribution drive structure is electrically connected to the controller. The controller is configured to control the output end of the air distribution drive structure to rotate by a corresponding angle based on a mode selection signal, so that the air baffle moves from an initial position to a corresponding position along the linear direction.

The present disclosure further provides a vehicle, including: a vehicle body; and the air distribution apparatus for the vehicle air-conditioner according to any one of the above embodiments, disposed in the vehicle body.

The air distribution apparatus for the vehicle air-conditioner provided by the present disclosure includes a housing and an air distribution assembly. The air distribution assembly includes an air baffle and an air baffle drive portion. The air baffle is disposed at the air inlet and movably connected to the air baffle drive portion in a linear direction. When the air baffle is in the first position, the air baffle completely blocks the first air inlet, and hot air may be introduced into the air cavity through the second air inlet. When the air baffle is in the second position, the air baffle completely blocks the second air inlet, and cold air may be introduced into the air cavity through the first air inlet. The air baffle is movably switchable between the first position and the second position. When the air baffle is located between the first position and the second position, the cold air and the hot air may be respectively introduced through the first air inlet and the second air inlet, so that mixed air of the cold air and the hot air may be blown into the vehicle. Meanwhile, the ratio of the hot air to the cold air in the mixed air can be adjusted by adjusting the position of the air baffle, enabling the temperature fine linear adjustment to be realized with a simple adjustment method.

It is to be understood that both the foregoing general description and the following detailed description are illustrative and explanatory only and are not restrictive of the disclosure. Other aspects will be appreciated upon reading and understanding the accompanying drawings and detailed description.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic perspective view of an air distribution apparatus for a vehicle air-conditioner according to an embodiment of the present disclosure.
FIG. 2 is a schematic plan view of one side of the air distribution apparatus for the vehicle air-conditioner shown in FIG. 1.
FIG. 3 is a schematic plan view of another side of the air distribution apparatus for the vehicle air-conditioner shown in FIG. 1.
FIG. 4 is a cross-sectional view of the air distribution apparatus for the vehicle air-conditioner taken along a line A-A shown in FIG. 3.
FIG. 5 is a schematic perspective view, in one direction, of a front face door assembly and a front face drive assembly of an air distribution apparatus for a vehicle air-conditioner according to an embodiment of the present disclosure.
FIG. 6 is a schematic perspective view, in another direction, of the front face door assembly and the front face drive assembly shown in FIG. 5 after a fixing bracket is removed.
FIG. 7 is a schematic perspective view of a rotatory disc of a front face door assembly in an air distribution apparatus for a vehicle air-conditioner according to an embodiment of the present disclosure.
FIG. 8 is a schematic perspective view, in one direction, of a rear-air-blowing door assembly and a rear-air-blowing drive assembly of the air distribution apparatus for the vehicle air-conditioner shown in FIG. 1.
FIG. 9 is a schematic perspective view, in another direction, of the rear-air-blowing door assembly and the rear-air-blowing drive assembly shown in FIG. 8.
FIG. 10 is a schematic perspective view, in one direction, of an air distribution assembly of the air distribution apparatus for the vehicle air-conditioner shown in FIG. 1.
FIG. 11 is a schematic perspective view, in another direction, of the air distribution assembly in the air distribution apparatus for the vehicle air-conditioner shown in FIG. 1.

### DETAILED DESCRIPTION

Illustrative embodiments will be described in detail below, and examples of the embodiments are illustrated in the accompanying drawings. When the following description refers to the accompanying drawings, unless otherwise indicated, the same reference numerals in different drawings represent the same or similar elements. The implementations described in the following illustrative embodiments do not represent all implementations consistent with the present disclosure. Rather, they are merely examples of apparatuses and methods consistent with some aspects of the present disclosure as detailed in the appended claims.

The terms used in the present disclosure are merely for the purpose of describing specific embodiments, and are not intended to limit the present disclosure. Technical terms or scientific terms used in the present disclosure should have general meanings as understood by one of ordinary skill in the art to which the present disclosure belongs, unless otherwise defined. Terms, such as "first", "second", and the like, and similar words used in the specification and claims of the present disclosure do not indicate any order, quantity, or importance, but are merely used to distinguish between different components. Similarly, similar terms, such as "one", "a/an", or the like, used in the specification and claims of the present disclosure do not represent a quantity limitation, but represent that there is at least one. Term, such as "a plurality of/multiple", "several", or the like, means two or more. Unless otherwise indicated, terms such as "front", "rear", "bottom", "top", "lower", "upper", and/or the like, are merely for ease of description, and are not limited to one position or one spatial orientation. Similar terms such as "comprise", "include", or the like, mean that an element or item appearing before "comprise" or "include" covers elements or items and equivalents thereof listed after "comprise" or "include", without excluding other elements or items. Similar terms "connect", "connect with each other", or the like, are not limited to physical or mechanical connections, and may include electrical connections, whether direct or indirect.

The terms used in the present disclosure are for the purpose of describing specific embodiments only, and are not intended to limit the present disclosure. As used in this specification and the appended claims, the singular forms "a/an", "said", and "the" are also intended to include plural forms unless clearly indicated otherwise in the context. It should also be understood that the term "and/or" as used herein refers to and includes any or all possible combinations of one or more associated listed items.

Air distribution assemblies of some air distribution apparatuses for air-conditioners each include a cold air baffle rotatably arranged and configured to separate a cold air inlet area from an interior of a vehicle, and a hot air baffle rotatably arranged and configured to separate a hot air inlet area from the interior of the vehicle. The cold air baffle and the hot air baffle are each controlled to rotate by a motor, which has a complex structure.

In view of this, the present disclosure provides an air distribution apparatus for a vehicle air-conditioner and a vehicle. The air distribution apparatus for the vehicle air-conditioner according to some embodiments of the present disclosure includes a housing and an air distribution assembly. The housing includes an air inlet side, an air outlet side, and an air cavity. An air inlet is provided at the air inlet side, the air inlet includes a first air inlet and a second air inlet, the first air inlet is configured to connect the air cavity and the cold air inlet area, and the second air inlet is configured to connect the air cavity and the hot air inlet area. The air distribution assembly is disposed at the air inlet side. The air distribution assembly includes an air baffle and an air baffle drive portion. The air baffle is disposed at the air inlet and movably connected to the air baffle drive portion in a linear direction. The air baffle has a first position and a second position. When the air baffle is in the first position, the air baffle completely blocks the first air inlet. When the air baffle is in the second position, the air baffle completely blocks the second air inlet. The air baffle is capable of movably switching between the first position and the second position.

In some embodiments of the present disclosure, the air distribution assembly includes an air baffle and an air baffle drive portion. The air baffle is disposed at the air inlet and movably connected to the air baffle drive portion in a linear direction. When the air baffle is in a first position, the air baffle completely blocks a first air inlet, and hot air may be introduced into an air cavity through a second air inlet. When the air baffle is in a second position, the air baffle completely blocks the second air inlet, and cold air may be introduced into the air cavity through the first air inlet. The air dam is movably switchable between the first position and the second position. When the air baffle is located between the first position and the second position, the cold air and the hot air may be respectively introduced through the first air inlet and the second air inlet, so that mixed air of the cold air and the hot air may be blown into the interior of the vehicle. Furthermore, the ratio of the hot air to the cold air in the mixed air can be adjusted by adjusting the position of the air baffle, so that the fine linear adjustment of the temperature can be realized with a simple adjustment method.

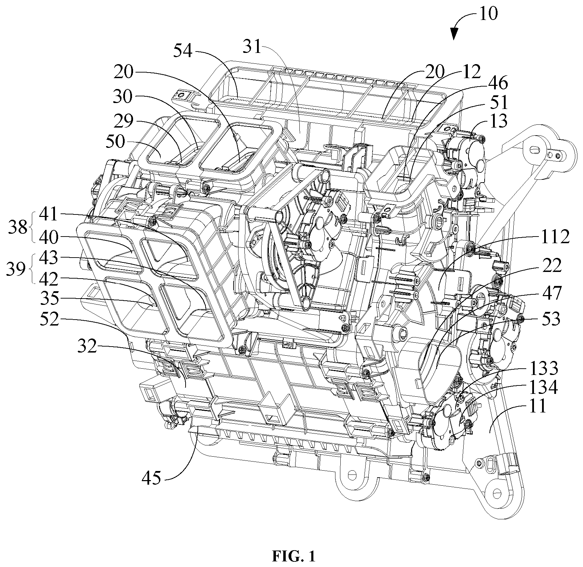

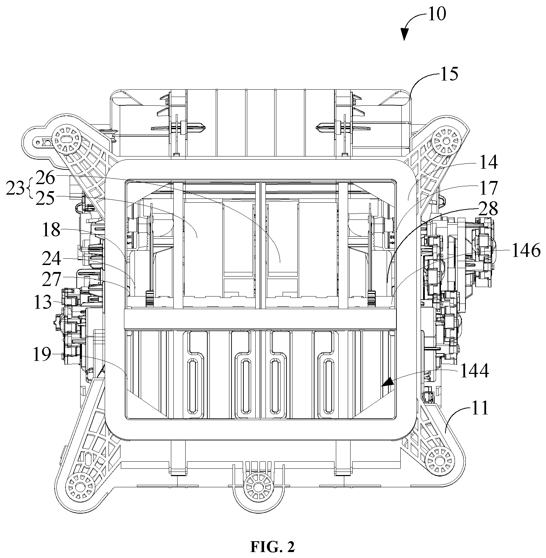

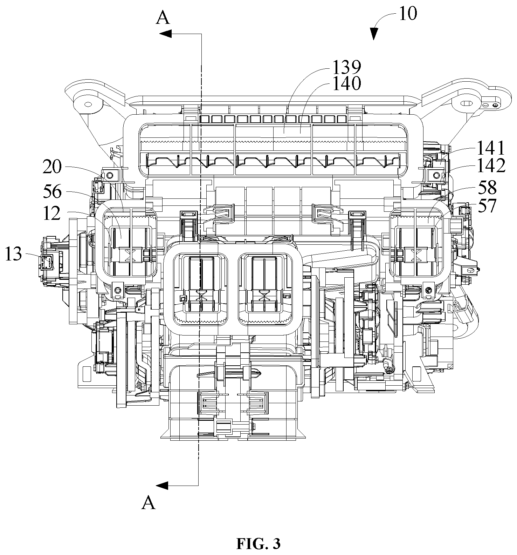

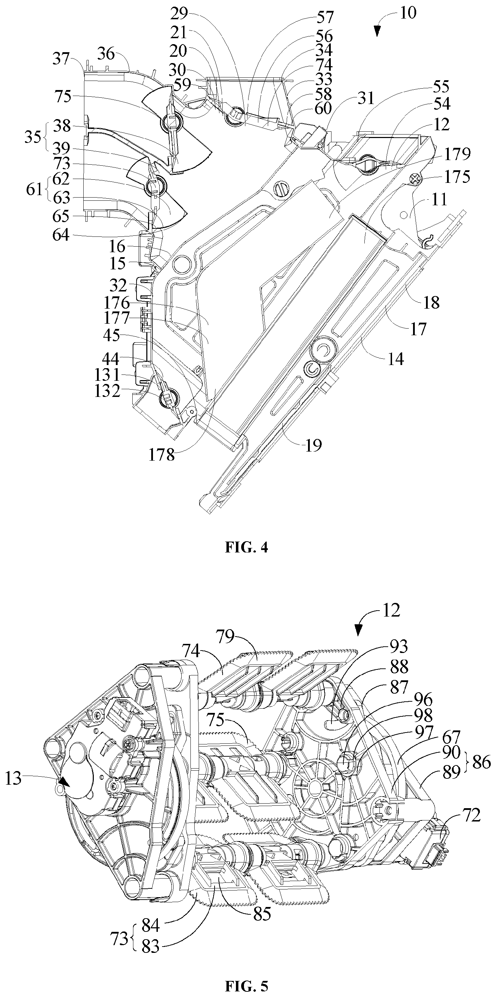

FIG. 1 is a schematic perspective view of an air distribution apparatus10 for a vehicle air-conditioner according to an embodiment of the present disclosure. FIG. 2 is a schematic plan view of one side of the air distribution apparatus 10 shown in FIG. 1. FIG. 3 is a schematic plan view of another side of the air distribution apparatus 10 for the vehicle air-conditioner shown in FIG. 1. FIG. 4 is a cross-sectional view of the air distribution apparatus 10 for the vehicle air-conditioner taken along a line A-A shown in FIG. 3. Referring to FIG. 1 to FIG. 4, the air distribution apparatus 10 for the vehicle air-conditioner may be applied to various vehicles such as new energy vehicles, and air with a certain temperature and humidity may be delivered to various positions inside the vehicle through the air distribution apparatus 10 for the vehicle air-conditioner. The air distribution apparatus 10 for the vehicle air-conditioner includes a housing 11, a door assembly 12 and a drive assembly 13.

The housing 11 includes an air inlet side 14, an air outlet side 15, and an air cavity 16. The cold air or hot air generated by a heat exchanger of the vehicle may enter the air cavity 16 of the air distribution apparatus 10 for the vehicle air-conditioner through the air inlet side 14, be discharged from the air distribution apparatus 10 for the vehicle air-conditioner through the air outlet side 15, and enter various positions inside the vehicle. The air inlet side 14 is configured to introduce at least one of the cold air or the hot air into the air cavity 16. In some embodiments, an air inlet 17 is provided at the air inlet side 14. The at least one of the cold air or the hot air may be introduced into the air cavity 16 through the air inlet 17. The air inlet 17 includes a first air inlet 18 and a second air inlet 19. The first air inlet 18 and the second air inlet 19 may have the same size. The first air inlet 18 is configured to communicate the air cavity 16 with the cold air inlet area, and the second air inlet 19 is configured to communicate the air cavity 16 with the hot air inlet area. The cold air may be introduced into the air cavity 16 through the first air inlet 18, and the hot air may be introduced into the air cavity 16 through the second air inlet 19.

Referring primarily to FIG. 2, in some embodiments, the air outlet side 15 is provided with a plurality of air outlets 20, and the plurality of air outlets 20 are in communication with the air cavity 16. The plurality of air outlets 20 include a plurality of front air outlets 21 and a plurality of rear air outlets 22 (as shown in FIG. 1). The front air outlet 21 is configured to deliver air to the front row inside the vehicle. The rear air outlet 22 is configured to deliver air to the rear row inside the vehicle. The air cavity 16 includes a front air cavity 23 and a rear air cavity 24 that are disposed separately from each other. The front air cavity 23 is communicated with the front air outlet 21 and the air inlet 17, and at least one of the cold air or the hot air may be introduced into the front air cavity 23 through the air inlet 17. The rear air cavity 24 is communicated with the rear air outlet 22 and the air inlet 17, and at least one of the cold air or the hot air may be introduced into the rear air cavity 24 through the air inlet 17. Therefore, independent control of air delivery to the front row inside the vehicle or air delivery to the rear row inside the vehicle can be achieved. In some embodiments, the front air cavity 23 includes a left front air cavity 25 and a right front air cavity 26 that are disposed separately from each other. The rear air cavity 24 includes a left rear air cavity 27 and a right rear air cavity 28 that are disposed separately from each other. The left rear air cavity 27 and the right rear air cavity 28 are disposed at opposite sides of the front air cavity 23.

Referring primarily to FIG. 4, in some embodiments, the plurality of air outlets 20 include a plurality of front face air outlets 29, and the plurality of front face air outlets 29 include comfort air outlets 30. The plurality of air outlets 20 include the plurality of front air outlets 21, and the plurality of front air outlets 21 include the plurality of front face air outlets 29. The air outlet side 15 includes a first surface 31 and a second surface 32, the first surface 31 is connected to the air inlet side 14, and the second surface 32 is connected to the first surface 31. The comfort air outlet 30 is disposed at a location on the first surface 31 close to the second surface 32, so that the comfort air outlet 30 can be directed towards the upper area of the front row inside the vehicle.

In some embodiments, the housing 11 includes a first air guide portion 33 extending obliquely outward from an edge of the comfort air outlet 30 in a direction away from the air inlet side 14. When the air distribution apparatus 10 for the vehicle air-conditioner is applied to a vehicle, the first air guide portion 33 extends obliquely upward from an edge of the comfort air outlet 30 in a direction toward a vehicle cockpit. A surface of the first air guide portion 33 close to the air inlet side 14 may be parallel to a front windshield of the vehicle. In this way, the air blown from the comfort air outlet 30 may not be directly delivered to the head of the user, but may be directed obliquely upward inside the vehicle interior, thereby improving the comfort of the user. One end of the first air guide portion 33 may be connected to the outer surface of the housing 11, and the other end of the first air guide portion 33 is provided with a first opening 34 for blowing air to the interior of the vehicle. The shape of the first opening 34 may be square, allowing for a larger airflow volume.

In some embodiments, the plurality of front face air outlets 29 includes a plurality of front direct-blowing face air outlets 35. The front direct-blowing face air outlets 35 are disposed at a location on the second surface 32 close to the first surface 31, so that the front direct-blowing face air outlet 35 can be directed towards the front-row seating area inside the vehicle. In this way, the front direct-blowing face air outlet 35 and the comfort air outlet 30 are close to each other, and the comfort air outlet 30 and the front direct-blowing face air outlet 35 may face different directions, which not only makes the structure more compact, but also allows air to be blown in different directions inside the vehicle, achieving different levels of temperature adjustment.

In some embodiments, the housing 11 includes a second air guide portion 36 extending obliquely outward from an edge of the front direct-blowing face air outlet 35 in a direction away from the first surface 31, and the first air guide portion 33 and the second air guide portion 36 are connected with each other in an arc-shaped transition. The second air guide portion 36 can play a guiding role, enabling air discharged from the front direct-blowing face air outlet 35 to be directed toward the front-row seating area inside the vehicle, which can quickly lower or increase the apparent temperature of the upper body of the front-row occupant, resulting in the improved temperature adjustment effect. One end of the second air guide portion 36 may be connected to the outer surface of the housing 11, and the other end of the second air guide portion 36 is provided with a second opening 37 for blowing air to the interior of the vehicle. The shape of the second opening 37 may be square.

In some embodiments, the plurality of front face air outlets 29 includes a front central-blowing face air outlet 38 and a front frontal-blowing face air outlet 39. The plurality of front direct-blowing face air outlets 35 includes a front central-blowing face air outlet 38 and a front frontal-blowing face air outlet 39. The number of the front central-blowing face air outlets 38 may be two, and the two front central-blowing face air outlets 38 include a left front central-blowing face air outlet 40 and a right front central-blowing face air outlet 41 (as shown in FIGS. 1 and 3). The left front central-blowing face air outlet 40 may be disposed corresponding to the left seat in the front row of the vehicle, and the right front central-blowing face air outlet 41 may be disposed corresponding to the right seat in the front row of the vehicle. The number of the front frontal-blowing face air outlets 39 may be two, and the two front frontal-blowing face air outlets 39 include a left front frontal-blowing face air outlet 42 and a right front frontal-blowing face air outlet 43. Similarly, the left front frontal-blowing face air outlet 42 may be disposed corresponding to the left seat in the front row of the vehicle, and the right front frontal-blowing face air outlet 43 may be disposed corresponding to the right seat in the front row of the vehicle. The front central-blowing face air outlet 38 is located at a side of the front frontal-blowing face air outlet 39 close to the comfort air outlet 30. By providing the front central-blowing face air outlet 38 and the front frontal-blowing face air outlet 39, the airflow can be delivered to different heights of the front-row seating area inside the vehicle, thereby enhancing the user experience.

In some embodiments, the plurality of air outlets 20 includes a front foot air outlet 44. The plurality of air outlets 20 include a plurality of front air outlets 21, and the plurality of front air outlets 21 include a front foot air outlet 44. The air outlet side 15 includes a third surface 45, a side of the second surface 32 is connected to the first surface 31, an opposite side of the second surface 32 is connected to a side of the third surface 45, and the other side of the third surface 45 is connected to the air inlet side 14. The front foot air outlet 44 may be disposed on the third surface 45, so that the front foot air outlet 44 may correspond to the foot space of the front-row seating area inside the vehicle. The arrangement of the front foot air outlet 44 can quickly lower the apparent temperature of the user's feet and improve the comfort of the user. The number of the front foot air outlets 44 may be two, and the two front foot air outlets 44 may include a left front foot air outlet and a right front foot air outlet. The left front foot air outlet may be disposed corresponding to the left seat in the front row of the vehicle, and the right front foot air outlet may be disposed corresponding to the right seat in the front row of the vehicle.

In some embodiments, the plurality of rear air outlets 22 include a rear face air outlet 46 and a rear foot air outlet 47 (as shown in FIG. 1). The shape of the rear face air outlet 46 may be square, and the shape of the rear foot air outlet 47 may be fan-shaped. The air outlet side 15 includes a side surface 112, and the side surface 112 is connected to the first surface 31. The side surface 112 is connected to the first surface 31, the second surface 32, and the air inlet side 14. The rear foot air outlet 47 is disposed on the side surface 112. The rear foot air outlet 47 may be disposed at a position of the side surface 112 close to the third surface 45. The rear foot air outlet 47 may correspond to a foot space of a rear-row seating area inside the vehicle. The rear foot air outlet 47 can be provided to quickly lower the apparent temperature of the feet of the rear-seat passenger, thereby improving the comfort of the user. The number of the rear foot air outlets 47 may be two, and the two rear foot air outlets 47 include a left rear foot air outlet 52 and a right rear foot air outlet 53. The left rear foot air outlet 52 may be disposed corresponding to a left seat in the rear row of the vehicle, and the right rear foot air outlet 53 may be disposed corresponding to a right seat in the rear row of the vehicle. The rear face air outlet 46 is disposed on the first surface 31, and the rear face air outlet 46 may correspond to the rear-row seating area inside the vehicle, which may quickly lower or increase the apparent temperature of the upper body of the rear-seat passenger, resulting in the improved temperature adjustment effect. There may be two rear face air outlets 46, and the two rear face air outlets 46 include a left rear face air outlet 50 and a right rear face air outlet 51. The left rear face air outlet 50 may be disposed corresponding to a left seat in the rear row of the vehicle, and the right rear face air outlet 51 may be disposed corresponding to a right seat in the rear row of the vehicle.

In some embodiments, the left rear face air outlet 50 and the right rear face air outlet 51 are disposed on two opposite sides of the plurality of front air outlets 21. The left rear foot air outlet 52 and the right rear foot air outlet 53 are disposed on opposite sides of the plurality of front air outlets 21. This makes the structure more compact and saves space.

In some embodiments, the plurality of air outlets 20 include a defrosting air outlet 54, and the defrosting air outlet 54 is disposed on a position of the first surface 31 close to the air inlet side 14. The defrosting air outlet 54 may be provided to deliver the hot air to the vehicle interior and the vehicle front windshield, to effectively clear ice, snow, and fog.

In some embodiments, the housing 11 includes a third air guide portion 55 extending from an edge of the defrosting air outlet 54 in a direction away from the third surface 45, where a length of a surface of the third air guide portion 55 close to the comfort air outlet 30 is less than a length of a surface of the third air guide portion 55 away from the comfort air outlet 30. When the air distribution apparatus 10 for the vehicle air-conditioner is applied to a vehicle, the defrosting air outlet 54 may face the vehicle front windshield, so that ice, snow and fog at the front windshield may be more effectively removed.

In some embodiments, the air distribution apparatus 10 for the vehicle air-conditioner includes at least the following modes: a defrosting mode, a face-blowing mode, a face and foot blowing mode, a foot-blowing mode, and a foot-blowing and defrosting mode.

In the defrosting mode, the defrosting air outlet 54 can be completely opened, while the other air outlets 20 remain closed. In the face-blowing mode, the front face air outlet 29 and the rear face air outlet 46 can be opened, while the other air outlets 20 remain closed. After the temperature is stable, the airflow volume of the front direct-blowing face air outlet 35 can be reduced, and the airflow volume of the comfort air outlet 30 can be increased. In the face and foot blowing mode, the front air outlet 21 and the rear air outlet 22 may be opened, while the defrosting air outlet 54 remains closed. In the foot-blowing mode, the front foot air outlet 44 and the rear foot air outlet 47 can be opened, while the remaining air outlets 20 remain closed. In the foot-blowing and defrosting mode, the front foot air outlet 44, the rear foot air outlet 47 and the defrosting air outlet 54 can be opened, while the remaining air outlets 20 remain closed.

Referring primarily to FIG. 3, the door assembly 12 includes a plurality of airflow-blocking structures 56 that are rotatably disposed on the housing 11, and the plurality of airflow-blocking structures 56 are disposed in one-to-one correspondence with the plurality of air outlets 20. The airflow-blocking structure 56 can completely block the air outlet 20, preventing air from being delivered into the interior of the vehicle through the air outlet 20. The airflow-blocking structure 56 may also partially block the air outlet 20, allowing air to be delivered into the interior of the vehicle through the air outlet 20.

The drive assembly 13 is connected to the airflow-blocking structure 56, so as to drive the airflow-blocking structure 56 to rotate. Therefore, the airflow-blocking structure 56 can be switched between a state of completely blocking the air outlet 20 and a state of partially blocking the air outlet 20.

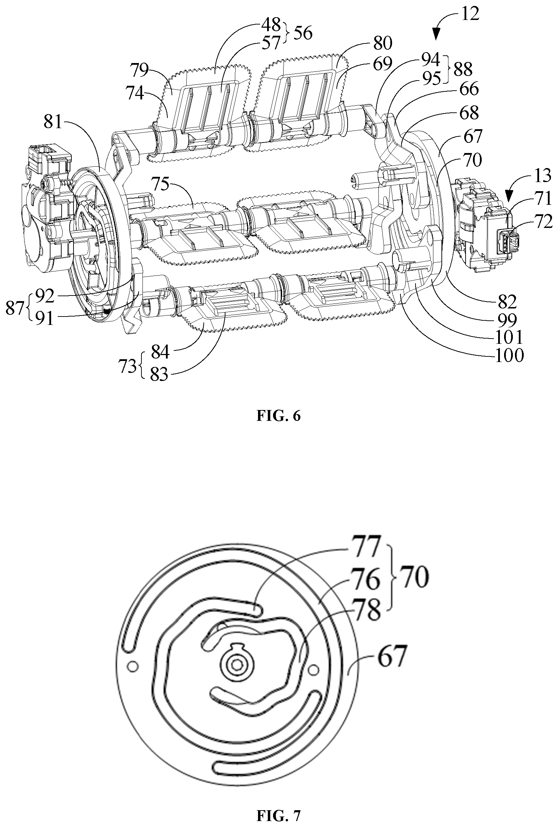

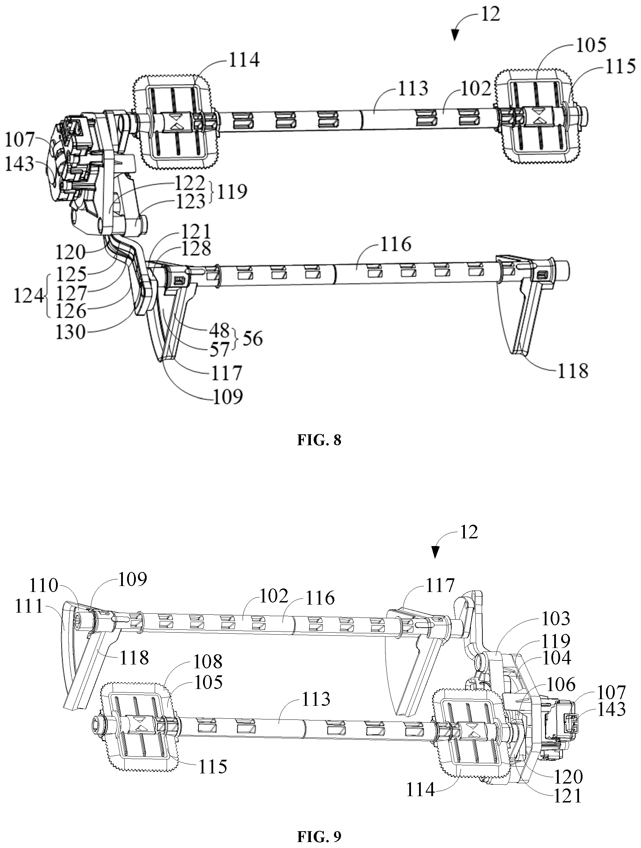

In some embodiments, the airflow-blocking structure 56 includes a main body 57 and a sealing portion 48 disposed around an edge of the main body 57 (as shown in FIG. 6). The drive assembly 13 may be connected to the main body 57 to drive the airflow-blocking structure 56 to rotate. The airflow-blocking structure 56 may be in a shape such as a square or a sector, which is not limited in this disclosure. The sealing portion 48 may extend outward from the edge of the main body 57 in a direction substantially parallel to a surface of the main body 57 (as shown in FIG. 6). The sealing portion 48 may also protrude outward from the edge of the main body 57 in a direction perpendicular to the surface of the main body 57 (as shown in FIG. 8). An edge of the sealing portion 48 extending outward in the direction substantially parallel to the surface of the main body 57 may be of a sawtooth shape.

Referring primarily to FIG. 4, in some embodiments, a baffle 58 protrudes inward from an edge of the air outlet 20 toward a center of the air outlet 20. The baffle 58 includes a first baffle 59 and a second baffle 60 disposed opposite to each other in a direction perpendicular to a rotating shaft of the airflow-blocking structure 56. The main body 57 located at a side of the rotating shaft of the airflow-blocking structure 56 is disposed outside the first baffle 59, and the main body 57 located at the other side of the rotating shaft of the airflow-blocking structure 56 is disposed inside the second baffle 60. The outside of the first baffle 59 may refer to a side of the first baffle 59 facing the housing 11. The inside of the second baffle 60 may refer to a side of the second baffle 60 facing the air cavity 16. The baffle 58 may be provided to limit the rotation direction of the airflow-blocking structure 56, and an included angle between the airflow-blocking structure 56 and the baffle 58 may be determined to determine the opening degree of the airflow-blocking structure 56. The arrangement of the baffle 58 can make the sealing effect of the air outlet 20 better, and it is not easy to leak air.

In some embodiments, an inner surface of the housing 11 is recessed with a guide groove 61. The airflow-blocking structure 56 is rotatably disposed in the guide groove 61. The guide groove 61 includes a bottom surface 62 and a plurality of side surfaces 63 connected to the bottom surface 62, the plurality of side surfaces 63 include a first side surface 64 connected to the baffle 58 and a second side surface 65 connected to the first side surface 64, and the second side surface 65 may be arc-shaped. When the airflow-blocking structure 56 rotates, the sealing portion 48 may press against the second side surface 65. In this way, the guide groove 61 is provided to facilitate the rotation of the airflow-blocking structure 56 and play a role of rotational guide. Meanwhile, the sealing portion 48 can be used to seal the side surface of the airflow-blocking structure 56 to prevent the side surface of the airflow-blocking structure 56 from leaking air, so that the air outlet volume of the air outlet 20 can be controlled by rotating the airflow-blocking structure 56.

FIG. 5 is a schematic perspective view, in one direction, of a front face door assembly 66 and a front face drive assembly 71 of an air distribution apparatus 10 for a vehicle air-conditioner according to an embodiment of the present disclosure. FIG. 6 is a schematic perspective view, in another direction, of the front face door assembly 66 and the front face drive assembly 71 shown in FIG. 5 after a fixing bracket 86 is removed. FIG. 7 is a schematic perspective view of a rotatory disc 67 of a front face door assembly 66 in an air distribution apparatus 10 for a vehicle air-conditioner according to an embodiment of the present disclosure. Referring to FIG. 5 to FIG. 7, in some embodiments, there are a plurality of door assemblies 12, and the plurality of door assemblies 12 include a front face door assembly 66. The front face door assembly 66 includes a rotatory disc 67, a plurality of front face linkage mechanisms 68, and a plurality of front face airflow-blocking structures 69 rotatably disposed on the housing 11 (as shown in FIG. 1). The plurality of door assemblies 12 include a front face door assembly 66, the door assembly 12 includes a plurality of airflow-blocking structures 56 rotatably disposed on the housing 11, and the front face door assembly 66 includes a plurality of front face airflow-blocking structures 69 rotatably disposed on the housing 11. The front face airflow-blocking structure 69 is disposed corresponding to the front face air outlet 29 (as shown in FIG. 1). The front face airflow-blocking structure 69 may partially block or completely block the front face air outlet 29.

The rotatory disc 67 is provided with a plurality of rotating grooves 70 extending along the circumferential direction of the rotatory disc 67 and having uneven inner walls. The plurality of rotating grooves 70 may be distributed along the radial direction of the rotatory disc 67. In this embodiment, the number of the rotating grooves 70 is three. The rotatory disc 67 may be disc-shaped. One end of the front face linkage mechanism 68 is movably disposed in the rotating groove 70, and the other end of the front face linkage mechanism 68 is connected to a rotating shaft of the front face airflow-blocking structure 69, so that swing of the front face airflow-blocking structure 69 is realized.

There are a plurality of drive assemblies 13, and the plurality of drive assemblies 13 include a front face drive assembly 71. The front face drive assembly 71 includes a front face drive structure 72. The front face drive structure 72 may be a motor. An output end of the front face drive structure 72 is connected to the rotatory disc 67, so as to drive the rotatory disc 67 to rotate. In some embodiments, the output end of the front face drive structure 72 is connected to the center of the rotatory disc 67, so as to facilitate the transmission of motion to the front face airflow-blocking structure 69 through the front face linkage mechanism 68. The rotatory disc 67 can be driven to rotate by the front face drive structure 72, so that one end of the front face linkage mechanism 68 can move in the rotating groove 70 with the uneven inner wall, and the other end of the front face linkage mechanism 68 can move, thereby realizing the swing of the front face airflow-blocking structure 69. The rotatory disc 67 is provided with a plurality of rotating grooves 70. In this way, one end of each of the plurality of front face linkage mechanisms 68 can be driven to move by driving the rotatory disc 67 to rotate, thereby realizing the swing of the plurality of front face airflow-blocking structures 69. It is possible to provide only one front face drive structure 72 to drive the rotatory disc 67 to rotate, so as to realize the swing of the plurality of front face airflow-blocking structures 69, which can save costs.

In some embodiments, the plurality of front face airflow-blocking structures 69 include a first front face airflow-blocking structure 73 disposed corresponding to the front frontal-blowing face air outlet 39, a second front face airflow-blocking structure 74 disposed corresponding to the comfort air outlet 30, and a third front face airflow-blocking structure 75 disposed corresponding to the front central-blowing face air outlet 38. The plurality of rotating grooves 70 include a first rotating groove 76, a second rotating groove 77, and a third rotating groove 78 (as shown in FIG. 7) sequentially distributed inward along the radial direction of the rotatory disc 67. The first front face airflow-blocking structure 73 is connected to the first rotating groove 76, the second front face airflow-blocking structure 74 is connected to the second rotating groove 77, and the third front face airflow-blocking structure 75 is connected to the third rotating groove 78. In this way, the displacements of the first front face airflow-blocking structure 73, the second front face airflow-blocking structure 74, and the third front face airflow-blocking structure 75 in the rotating grooves 70 may be different, so that when the output end of the front face drive structure 72 rotates, swing angles of the first front face airflow-blocking structure 73, the second front face airflow-blocking structure 74, and the third front face airflow-blocking structure 75 are different, thereby resulting in different air output volumes from the front frontal-blowing face air outlet 39, the front central-blowing face air outlet 38, and the comfort air outlet 30. In this manner, the structure is simple, different air distribution conditions can be achieved, and the user experience is good.

In some embodiments, rotation directions of the first front face airflow-blocking structure 73 and the second front face airflow-blocking structure 74 are different, and rotation directions of the first front face airflow-blocking structure 73 and the third front face airflow-blocking structure 75 are the same. As shown in FIG. 4, the comfort air outlet 30 is disposed on the first surface 31, and the front frontal-blowing face air outlet 39 and the front central-blowing face air outlet 38 are disposed on the second surface 32. Taking the second front face airflow-blocking structure 74 as an example, one side of the second front face airflow-blocking structure 74 is closer to the second surface 32 than the other side thereof. The other side of the second front face airflow-blocking structure 74 rotates toward the second surface 32. In this way, the openings exposed after the first front face airflow-blocking structure 73, the second front face airflow-blocking structure 74, and the third front face airflow-blocking structure 75 rotate can face the air inlet side 14, so that the first front face airflow-blocking structure 73, the second front face airflow-blocking structure 74, and the third front face airflow-blocking structure 75 can play a guiding role, facilitating air discharging of the front face air outlet 29.

In some embodiments, the plurality of front face airflow-blocking structures 69 include a left front face airflow-blocking structure 79 and a right front face airflow-blocking structure 80. The number of the rotatory discs 67 is at least two, and the at least two rotatory discs 67 include a left rotatory disc 81 and a right rotatory disc 82. The left front face airflow-blocking structure 79 is connected to the left rotatory disc 81, and the right front face airflow-blocking structure 80 is connected to the right rotatory disc 82. In this way, the left rotation disc 81 and the right rotation disc 82 can be controlled to rotate respectively, enabling the swings of the left front face airflow-blocking structure 79 and the right front face airflow-blocking structure 80 respectively, thereby realizing the separate control of the front-row left-side space and the front-row right-side space inside the vehicle, which provides a good user experience.

Referring primarily to FIG. 6 and FIG. 5, in some embodiments, the first front face airflow-blocking structure 73 includes a main body 83 and a sealing portion 84 disposed around an edge of the main body 83, and the main body 83 is provided with an air inlet 85. In this way, when the first front face airflow-blocking structure 73 completely blocks the front frontal-blowing face air outlet 39, air may be blown out through the air inlet 85, ensuring air exchange inside the vehicle.

In some embodiments, the front face door assembly 66 includes a fixing bracket 86. The front face linkage mechanism 68 includes a first front face linkage 87 and a second front face linkage 88. The first front face linkage 87 is rotatably mounted to the fixing bracket 86. The first front face linkage 87 may rotate relative to the fixing bracket 86. A first end of the first front face linkage 87 is movably disposed in the rotating groove 70 and can move in the rotating groove 70. A second end of the first front face linkage 87 is connected to a first end of the second front face linkage 88, and a second end of the second front face linkage 88 is connected to the rotating shaft of the front face airflow-blocking structure 69. In this way, the rotatory disc 67 can be driven to rotate by the front face drive structure 72, so that the first end of the first front face linkage 87 can move in the rotating groove 70 with the uneven inner wall to drive the second front face linkage 88 to move, thereby realizing the swing of the front face airflow-blocking structure 69. The implementation is simple and highly operable.

In some embodiments, the fixing bracket 86 includes a first fixing bracket 89 and a second fixing bracket 90 connected to the first fixing bracket 89, the rotatory disc 67 and the first front face linkage 87 are located between the first fixing bracket 89 and the second fixing bracket 90, and the first fixing bracket 89 is configured to fix the front face drive structure 72. The output end of the front face drive structure 72 may pass through the first fixing bracket 89, and be connected to the rotatory disc 67. The second front face linkage 88 may abut against a surface of the second fixing bracket 90. This arrangement makes the structure more compact, and can prevent the external structure from interfering with the movement of the first front face linkage 87.

In some embodiments, the first front face linkage 87 includes a main body 91, and a protrusion portion 92 connected to the main body 91 and located at the first end of the first front face linkage 87. The protrusion portion 92 is movably limited in the rotating groove 70. This arrangement facilitates the movement of the first end of the first front face linkage 87 within the rotating groove 70 with the uneven inner wall.

In some embodiments, the fixing bracket 86 is provided with a limiting groove 93 extending in an arc shape and penetrating through the fixing bracket 86 (as shown in FIG. 5). The limiting groove 93 is disposed on the second fixing bracket 90. The second front face linkage 88 includes a main body 94, and a protrusion portion 95 connected to the main body 94 and located at the first end of the second front face linkage 88 (as shown in FIG. 6), and the protrusion portion 95 passes through the limiting groove 93 and is connected to the second end of the first front face linkage 87. The protrusion portion 95 is movably limited within the limiting groove 93. The arrangement of the limiting groove 93 can limit the displacement of the protrusion portion 95, thereby limiting the swing amplitude of the front face airflow-blocking structure 69.

In some embodiments, the main body 91 is convexly provided with an elastic protrusion portion 96, the second fixing bracket 90 is convexly provided with a protrusion-fitting portion 97, the protrusion-fitting portion 97 is provided with a communicating rotation-fitting hole 98, and the elastic protrusion portion 96 is rotatably and elastically clamped in the rotation-fitting hole 98. In this way, while ensuring that the first front face linkage 87 can rotate relative to the fixing bracket 86, the position of the first front face linkage 87 can be restricted, thereby ensuring the stability of the structure.

In some embodiments, the main body 91 includes a first portion 99, a second portion 100, and a first bending portion 101. The first portion 99 and the second portion 100 are connected with each other by the first bending portion 101, and the first portion 99 is disposed closer to the second fixing bracket 90 than the second portion 100, so that the distance between the second end of the first front face linkage 87 and the first end of the second front face linkage 88 can be set even smaller, thereby making the relative movement of the first front face linkage 87 and the second front face linkage 88 more stable.

In some embodiments, the air distribution apparatus 10 for the vehicle air-conditioner includes a controller (not shown). The front face drive structure 72 is electrically connected to the controller. The controller is configured to control the output end of the front face drive structure 72 to rotate according to the mode selection signal, thereby driving the rotatory disc 67 to rotate from an initial angle to a corresponding angle. In this way, in different modes of the air distribution apparatus 10 for the vehicle air-conditioner, the rotation angles of the rotatory disc 67 may be different, so that the swing angles of the front face airflow-blocking structures 69 located in different rotating grooves 70 are different, and the air output volumes of the plurality of front face air outlets 29 are different. In this way, the structure is simple, different air distribution conditions can be achieved, and the user experience is good.

In some embodiments, if the temperature change obtained by the controller does not exceed the set temperature within the set time, the controller is configured to control the output end of the front face drive structure 72 to rotate according to the mode selection signal, so as to drive the rotatory disc 67 to rotate from the initial angle to the corresponding angle. The temperature change obtained by the controller refers to a temperature change inside the vehicle obtained by a temperature sensor disposed inside the vehicle. In this embodiment, if the temperature change obtained by the controller does not exceed 0.5 °C within two minutes, the controller is configured to control the output end of the front face drive structure 72 to rotate according to the mode selection signal, so as to drive the rotatory disc 67 to rotate. In this way, after the temperature inside the vehicle remains stable, the rotatory disc 67 can be driven to rotate to adjust the swing angle of the plurality of front face airflow-blocking structures 69.

In some embodiments, if the corresponding angle is less than a set angle, the opening degree of the second front face airflow-blocking structure 74 is gradually increased, and the opening degree of the third front face airflow-blocking structure 75 is gradually decreased. In this way, after the temperature is stable, the airflow volume of the front central-blowing face air outlet 38 can be reduced, the airflow volume of the comfort air outlet 30 can be increased, the air blown out of the comfort air outlet 30 is used to maintain the temperature in the vehicle, and the air blown out of the comfort air outlet 30 will not blow on the user directly, thereby improving the user experience. The set angle may range from 140° to 150°.

In some embodiments, the controller is configured to control the output end of the front face drive structure 72 to rotate according to a first mode signal, so as to drive the rotatory disc 67 to rotate from the initial angle to a first angle. The controller is configured to control the output end of the front face drive structure 72 to rotate according to a second mode signal, so as to drive the rotatory disc 67 to rotate from the initial angle to a second angle. The first angle is different from the second angle. In this embodiment, the first mode signal may represent a full face-blowing mode, and the second mode signal may represent a face and foot blowing mode. The first angle is less than the second angle. In this way, in different working modes, the rotation angles of the rotatory disc 67 vary, which consequently varies the swing angles of the plurality of front face airflow-blocking structures 69. The airflow volume of the plurality of front face air outlets may be adjusted to adapt to different working modes, thereby achieving good user experience.

In some embodiments, if the controller acquires for the first time that the temperature change does not exceed the set temperature, the controller is configured to control the output end of the front face drive structure 72 to rotate according to the mode selection signal, so as to drive the rotatory disc 67 to rotate from the initial angle to the first angle. If the controller acquires for the second time that the temperature change does not exceed the set temperature, the controller is configured to control the output end of the front face drive structure 72 to rotate according to the mode selection signal, so as to drive the rotatory disc 67 to rotate from the first angle to a third angle. The third angle is greater than the first angle and less than the set angle. When the rotatory disc 67 is located at the third angle, the front central-blowing face air outlet 38 can be closed.

FIG. 8 is a schematic perspective view, in one direction, of a rear-air-blowing door assembly 102 and a rear-air-blowing drive assembly 143 of the air distribution apparatus 10 for the vehicle air-conditioner shown in FIG. 1. FIG. 9 is a schematic perspective view, in another direction, of the rear-air-blowing door assembly 102 and the rear-air-blowing drive assembly 143 shown in FIG. 8. Referring to FIGS. 8 and 9, in some embodiments, the plurality of door assemblies 12 include a rear-air-blowing door assembly 102. The rear-air-blowing door assembly 102 includes a rotating disc 103, a plurality of rear-air-blowing linkage mechanisms 104, and a plurality of rear-air-blowing airflow-blocking structures 105 rotatably disposed on the housing 11. The plurality of door assemblies 12 include a rear-air-blowing door assembly 102, the door assemblies 12 include a plurality of airflow-blocking structures 56 rotatably disposed on the housing 11, and the rear-air-blowing door assembly 102 includes a plurality of rear-air-blowing airflow-blocking structures 105 rotatably disposed on the housing 11. The rear-air-blowing airflow-blocking structure 105 is disposed corresponding to the rear air outlet 22. The rear-air-blowing airflow-blocking structure 105 may partially block or completely block the rear air outlet 22.

The rotating disc 103 is provided with a plurality of rotating grooves 106 extending along the circumferential direction of the rotating disc 103 and having uneven inner walls. The plurality of rotating grooves 106 may be distributed along a radial direction of the rotating disc 103. In this embodiment, the number of the rotating grooves 106 is two. The rotating disc 103 may be disc-shaped. One end of the rear-air-blowing linkage mechanism 104 is movably disposed in the rotating groove 106, and the other end of the rear-air-blowing linkage mechanism 104 is connected to the rotating shaft of the rear-air-blowing airflow-blocking structure 105 to realize the swing of the rear-air-blowing airflow-blocking structure 105.

The plurality of drive assemblies 13 include a rear-air-blowing drive assembly 143, the rear-air-blowing drive assembly 143 includes a rear-air-blowing drive structure 107, and the rear-air-blowing drive structure 107 may be a motor. An output end of the rear-air-blowing drive structure 107 is connected to the rotating disc 103 to drive the rotating disc 103 to rotate. In some embodiments, the output end of the rear-air-blowing drive structure 107 is connected to the center of the rotating disc 103, which facilitates the rotation of the rotating disc 103. The rotating disc 103 may be driven to rotate by the rear-air-blowing drive structure 107, so that one end of the rear-air-blowing linkage mechanism 104 may move in the rotating groove 106 with the uneven inner wall, and the other end of the rear-air-blowing linkage mechanism 104 may move, thereby realizing the swing of the rear-air-blowing airflow-blocking structure 105. It is possible to provide only one rear-air-blowing drive structure 107 to drive the rotating disc 103 to rotate, so as to realize the swing of the plurality of rear-air-blowing airflow-blocking structures 105, which can save the cost.

In some embodiments, the plurality of rear-air-blowing airflow-blocking structures 105 include a rear face airflow-blocking structure 108 corresponding to the rear face air outlet 46, and a rear foot airflow-blocking structure 109 corresponding to the rear foot air outlet 47. The plurality of rotating grooves 106 include a first rotating groove and a second rotating groove sequentially distributed inward along the radial direction of the rotating disc 103. The rear foot airflow-blocking structure 109 is connected to the first rotating groove, and the rear face airflow-blocking structure 108 is connected to the second rotating groove. In this way, displacements of the rear face airflow-blocking structure 108 and the rear foot airflow-blocking structure 109 in the rotating groove 106 may be different, so that when the rear-air-blowing drive structure 107 rotates, and swing angles of the rear face airflow-blocking structure 108 and the rear foot airflow-blocking structure 109 are different, thereby resulting in different air output volumes of the rear face air outlet 46 and the rear foot air outlet 47. In this way, the structure is simple, different air distribution conditions can be achieved, and the user experience is good.

In some embodiments, the rear foot airflow-blocking structure 109 includes a main body 110 and a sealing portion 111 disposed around an edge of the main body 110. The sealing portion 111 is pressed against an inner edge of the rear foot air outlet 47. In this way, air leakage at the rear foot air outlet 47 can be prevented. In some embodiments, the main body 110 of the rear foot airflow-blocking structure 109 is fan-shaped.

In some embodiments, a large surface of the rear face airflow-blocking structure 108 where the rotating shaft is disposed is perpendicular to a large surface of the rear foot airflow-blocking structure 109 where the rotating shaft is disposed. In this way, the rotation of the rear-air-blowing drive structure 107 can drive the rear face airflow-blocking structure 108 and the rear foot airflow-blocking structure 109 to swing, which can simultaneously realize the adjustment of the air output volume of the rear foot air outlet 47 on the side surface 112 (as shown in FIG. 1) and the air output volume of the rear face air outlet 46 on the first surface 31, and the structure is simple.

In some embodiments, the rear-air-blowing door assembly 102 includes a rear face mounting rod 113, and the plurality of rear-air-blowing airflow-blocking structures 105 include a left rear face airflow-blocking structure 114 and a right rear face airflow-blocking structure 115. The left rear face airflow-blocking structure 114 and the right rear face airflow-blocking structure 115 are disposed at opposite ends of the rear face mounting rod 113, and one end of the rear face mounting rod 113 is connected to the rotating groove 106. In this way, the rear-air-blowing drive structure 107 can drive the left rear face airflow-blocking structure 114 and the right rear face airflow-blocking structure 115 to swing.

In some embodiments, the rear-air-blowing door assembly 102 includes a rear foot mounting rod 116, and the plurality of rear-air-blowing airflow-blocking structures 105 include a left rear foot airflow-blocking structure 117 and a right rear foot airflow-blocking structure 118. The left rear foot airflow-blocking structure 117 and the right rear foot airflow-blocking structure 118 are disposed at two opposite ends of the rear foot mounting rod 116, and an end of the rear foot mounting rod 116 is connected to the rotating groove 106. In this way, the left rear foot airflow-blocking structure 117 and the right rear foot airflow-blocking structure 118 can be driven to swing by one rear-air-blowing drive structure 107. All the rear-air-blowing airflow-blocking structures 105 can be driven to swing by one rear-air-blowing drive structure 107, which can save costs.

In some embodiments, the rear-air-blowing door assembly 102 includes a mounting bracket 119. The rear-air-blowing linkage mechanism 104 includes a first rear-air-blowing linkage 120 and a second rear-air-blowing linkage 121. The first rear-air-blowing linkage 120 is rotatably mounted to the mounting bracket 119. The first rear-air-blowing linkage 120 may rotate relative to the mounting bracket 119.

A first end of the first rear-air-blowing linkage 120 is movably disposed in the rotating groove 106 and can move in the rotating groove 106. A second end of the first rear-air-blowing linkage 120 is connected to a first end of the second rear-air-blowing linkage 121, and a second end of the second rear-air-blowing linkage 121 is connected to a rotating shaft of the rear-air-blowing airflow-blocking structure 105. In this way, the rotating disc 103 can be driven to rotate by the rear-air-blowing drive structure 107, so that the first end of the first rear-air-blowing linkage 120 can move in the rotating groove 106 with the uneven inner wall to drive the second rear-air-blowing linkage 121 to move, thereby realizing the swing of the plurality of rear-air-blowing airflow-blocking structures 105. The implementation is simple and highly operable.

In some embodiments, the mounting bracket 119 includes a first mounting bracket 122 and a second mounting bracket 123 connected to the first mounting bracket 122. The rotating disc 103 and a part of the first rear-air-blowing linkage 120 are located between the first mounting bracket 122 and the second mounting bracket 123, and the first mounting bracket 122 is configured to fix the rear-air-blowing drive structure 107. The first rear-air-blowing linkage 120 includes a main body 124. The main body 124 includes a third portion 125, a fourth portion 126, and a second bending portion 127. The third portion 125 and the fourth portion 126 are connected with each other by the second bending portion 127. The rotating disc 103 and the third portion 125 are located between the first mounting bracket 122 and the second mounting bracket 123, which can save space and make the structure more compact.

In some embodiments, the second rear-air-blowing linkage 121 includes a main body 128 and a protruding portion (not shown) connected to the main body 128 and located at the first end of the second rear-air-blowing linkage 121, the main body 124 of the first rear-air-blowing linkage 120 is provided with an arc notch 130, and the protruding portion of the second rear-air-blowing linkage 121 is fixedly limited in the arc notch 130. In this way, the fixing effect of the first rear-air-blowing linkage 120 and the second rear-air-blowing linkage 121 is better.

In some embodiments, the rear-air-blowing drive structure 107 is electrically connected to a controller, and the controller is configured to control the output end of the rear-air-blowing drive structure 107 to rotate according to the mode selection signal, so as to drive the rotating disc 103 to rotate from an initial rotation angle to a set rotation angle. In this way, in different modes of the air distribution apparatus 10 for the vehicle air-conditioner, rotation angles of the rotating disc 103 may be different, so that swing angles of the rear-air-blowing airflow-blocking structures 105 located in different rotating grooves 106 are different, thereby resulting in different air output volumes of the plurality of rear air outlets 22. In this way, the structure is simple, different air distribution conditions can be achieved, and the user experience is good.

In some embodiments, if the set rotation angle is less than a first set rotation angle, the rear foot airflow-blocking structure 109 completely blocks the rear foot air outlet 47, and the opening degree of the rear face airflow-blocking structure 108 decreases as the rotation angle of the rotating disc 103 increases. The first set rotation angle may be 60°. If the set rotation angle is greater than a second set rotation angle, the rear face airflow-blocking structure 108 completely blocks the rear face air outlet 46, and the opening degree of the rear foot airflow-blocking structure 109 decreases as the rotation angle of the rotating disc 103 increases. The second set rotation angle may be 215°. In this way, the rear foot airflow-blocking structure 109 may completely block the rear foot air outlet 47 in the full face-blowing mode; and the rear face airflow-blocking structure 108 may completely block the rear face air outlet 46 in the full foot-blowing mode.

In some embodiments, the controller is configured to control the output end of the rear-air-blowing drive structure 107 to rotate according to a first mode signal, so as to drive the rotating disc 103 to rotate from an initial rotation angle to a first rotation angle. The first mode signal may represent a full face-blowing mode and the first rotation angle may be 60°. In this case, the rear foot airflow-blocking structure 109 may completely block the rear foot air outlet 47.

In some embodiments, the controller is configured to control the output end of the rear-air-blowing drive structure 107 to rotate according to a second mode signal, so as to drive the rotating disc 103 to rotate from an initial rotation angle to a second rotation angle. The second mode signal may represent a face and foot blowing mode and the second rotation angle may be 110°. If the temperature change obtained by the controller does not exceed the set temperature during the set time, the controller is configured to control the output end of the rear-air-blowing drive structure 107 to rotate, so as to drive the rotating disc 103 to rotate from the second rotation angle to a sixth rotation angle, thereby reducing the opening degree of the rear face airflow-blocking structure 108. The sixth rotation angle is smaller than the second rotation angle. In this way, in the face and foot blowing mode, when the temperature is stable, the airflow volume of the rear face air outlet 46 can be reduced, and the air blown out of the comfort air outlet 30 is used to maintain the temperature inside the vehicle, thereby improving the user experience.

In some embodiments, the controller is configured to control the output end of the rear-air-blowing drive structure 107 to rotate according to a third mode signal, so as to drive the rotating disc 103 to rotate from the initial rotation angle to a third rotation angle. The third mode signal may represent the full foot-blowing mode and the third rotation angle may be 215°. In this case, the rear face airflow-blocking structure 108 may completely block the rear face air outlet 46.

In some embodiments, the controller is configured to control the output end of the rear-air-blowing drive structure 107 to rotate according to a fourth mode signal, so as to drive the rotating disc 103 to rotate from the initial rotation angle to a fourth rotation angle. The fourth mode signal may represent the foot-blowing and defrosting mode and the fourth rotation angle may be 215°. In this case, the rear face airflow-blocking structure 108 may completely block the rear face air outlet 46.

In some embodiments, the controller is configured to control the output end of the rear-air-blowing drive structure 107 to rotate according to a fifth mode signal, so as to drive the rotating disc 103 to rotate from the initial rotation angle to a fifth rotation angle. The fifth mode signal may represent the defrosting mode and the fifth rotation angle may be 305°. In this case, the rear face airflow-blocking structure 108 may completely block the rear face air outlet 46, and the rear foot airflow-blocking structure 109 may completely block the rear foot air outlet 47. In this way, the rotation angles of the rotating disc 103 are different in different working modes, enabling the swing angles of the plurality of rear-air-blowing airflow-blocking structures 105 to be different, which can adjust the air output volume of the plurality of rear air outlets 22 to adapt to different working modes, thereby achieving good user experience.

Referring to FIG. 1 to FIG. 4 again, in some embodiments, the plurality of door assemblies 12 include a front foot door assembly 131, and the front foot door assembly 131 includes a plurality of front foot airflow-blocking structures 132 rotatably disposed on the housing 11. The front foot airflow-blocking structure 132 is disposed corresponding to the front foot air outlet 44. The plurality of drive assemblies 13 include a front foot drive assembly 133, the front foot drive assembly 133 includes a front foot drive structure 134, and the front foot drive structure 134 may be a motor. An output end of the front foot drive structure 134 is connected to the front foot airflow-blocking structure 132. The number of the front foot drive structures 134 may be two, the number of the front foot airflow-blocking structures 132 may be two, the two front foot drive structures 134 include a left front foot drive structure and a right front foot drive structure, and the two front foot airflow-blocking structures 132 include a left front foot airflow-blocking structure and a right front foot airflow-blocking structure. The left front foot drive structure is connected to the left front foot airflow-blocking structure, and the right front foot drive structure is connected to the right front foot airflow-blocking structure. In this way, the left front foot drive structure and the right front foot drive structure can be controlled separately, and user experience is good.

In some embodiments, the plurality of door assemblies 12 include a defrosting door assembly 139, and the defrosting door assembly 139 includes a defrosting airflow-blocking structure 140 rotatably disposed on the housing 11. The defrosting airflow-blocking structure 140 is disposed corresponding to the defrosting air outlet 54. The plurality of drive assemblies 13 include a defrosting drive assembly 141. The defrosting drive assembly 141 includes a defrosting drive structure 142, and the defrosting drive structure 142 may be a motor. An output end of the defrosting drive structure 142 is connected to the defrosting airflow-blocking structure 140, and is configured to drive the defrosting airflow-blocking structure 140 to rotate, thereby achieving opening and closing of the defrosting air outlet 54.

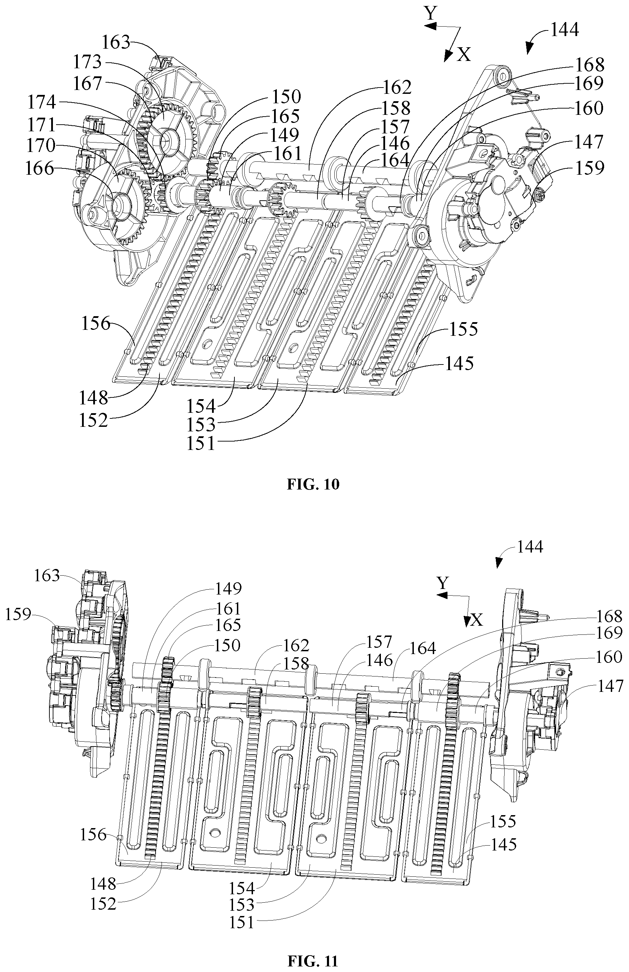

FIG. 10 is a schematic perspective view, in one direction, of an air distribution assembly 144 of the air distribution apparatus 10 for the vehicle air-conditioner shown in FIG. 1. FIG. 11 is a schematic perspective view, in another direction, of the air distribution assembly 144 in the air distribution apparatus 10 for the vehicle air-conditioner shown in FIG. 1. Referring to FIG. 10 and FIG. 11, in some embodiments, the air distribution apparatus 10 for the vehicle air-conditioner includes an air distribution assembly 144. The air distribution assembly 144 is disposed on the air inlet side 14 (as shown in FIG. 2). The air distribution assembly 144 includes an air baffle 145 and an air baffle drive portion 146. The shape of the air baffle 145 may be square. The air baffle 145 is disposed at the air inlet 17 and is movably connected to the air baffle drive portion 146 along a linear direction X. The air baffle drive portion 146 may rotate to drive the air baffle 145 to move along the linear direction X.

In some embodiments, the air distribution assembly 144 includes an air distribution drive structure 147, and the air distribution drive structure 147 may be a motor. An output end of the air distribution drive structure 147 is connected to the air baffle drive portion 146 to drive the air baffle drive portion 146 to rotate. The air baffle drive portion 146 is disposed at the air inlet 17, and the air baffle drive portion 146 may pass through the center of the air inlet 17 and be located between the first air inlet 18 and the second air inlet 19 (as shown in FIG. 2). The air baffle 145 includes a first position and a second position; when the air baffle 145 is in the first position, the air baffle 145 completely blocks the first air inlet 18; and when the air baffle 145 is in the second position, the air baffle 145 completely blocks the second air inlet 19. When the air baffle 145 is in the first position, the second air inlet 19 is at least partially exposed. When the air baffle 145 is in the second position, the first air inlet 18 is at least partially exposed. The air baffle 145 is movably switchable between the first position and the second position. It can be understood that the air baffle 145 may be located at the first position, the second position, or any position between the first position and the second position, which is not limited in the present disclosure. In this way, when the air baffle 145 is in the first position, hot air may be introduced into the air cavity 16 through the second air inlet 19. When the air baffle 145 is in the second position, cold air may be introduced into the air cavity 16 through the first air inlet 18. When the air baffle 145 is located between the first position and the second position, cold air and hot air may be respectively introduced through the first air inlet 18 and the second air inlet 19, and mixed air of the cold air and the hot air may be delivered into the vehicle. In addition, the ratio of the hot air to the cold air in the mixed air can be adjusted by adjusting the position of the air baffle 145, enabling the temperature to be finely adjusted with a simple adjustment method.

In some embodiments, a large surface of the air baffle 145 is provided with a rack 148, and the rack 148 extends along the linear direction X. The air baffle drive portion 146 includes an extension rod 149 and a gear 150. The shape of the extension rod 149 may be cylindrical. The extension rod 149 extends in a horizontal direction Y perpendicular to the linear direction X, and the gear 150 is disposed on the extension rod 149 and engages with the rack 148. The gear 150 may be sleeved on an outer surface of the extension rod 149. Rotation of the extension rod 149 may drive the gear 150 to rotate, so that the air baffle 145 provided with the rack 148 may move in the linear direction X. By using the gear 150 and the rack 148 as transmission devices, the vibration and error during the transmission process are small, the position of the air baffle 145 can be accurately adjusted, and the position of the air baffle 145 can be adjusted in a simple manner.

In some embodiments, the number of the air baffles 145 is at least two, the at least two air baffles 145 include a front air baffle 151 and a rear air baffle 152, the front air baffle 151 is disposed at a position of the air inlet 17 corresponding to the front air cavity 23, and the rear air baffle 152 is disposed at a position of the air inlet 17 corresponding to the rear air cavity 24 (as shown in FIG. 2). In this way, the air intake control of the front air cavity 23 and the rear air cavity 24 can be realized respectively, which is capable of adapting to different temperature requirements of the front row and the rear row inside the vehicle, resulting in the better user experience.

In some embodiments, the at least two air baffles 145 include a left front air baffle 153, a right front air baffle 154, a left rear air baffle 155, and a right rear air baffle 156. In this way, different temperature requirements of a front-row left seat and a front-row right seat inside the vehicle, as well as the rear-row left seat and the rear-row right seat inside the vehicle can be respectively met.

In some embodiments, the number of the air baffle drive portions 146 is at least two, and the at least two air baffle drive portions 146 include a left front air baffle drive portion 157 and a right front air baffle drive portion 158. The left front air baffle 153 is movably connected to the left front air baffle drive portion 157 along the linear direction X. The right front air baffle 154 is movably connected to the right front air baffle drive portion 158 along the linear direction X. The number of the air distribution drive structures 147 is at least two, and the at least two air distribution drive structures 147 include two first air distribution drive structures 159. Output ends of the two first air distribution drive structures 159 are respectively connected to the left front air baffle drive portion 157 and the right front air baffle drive portion 158, and are configured to drive the left front air baffle drive portion 157 and the right front air baffle drive portion 158 to rotate. In this way, two air distribution drive structures 147 can be provided to respectively control the left front air baffle 153 and the right front air baffle 154 to move, which can respectively adapt to different temperature requirements of the front-row left seat and the front-row right seat inside the vehicle.

In some embodiments, the at least two air baffle drive portions 146 include a left rear air baffle drive portion 160 and a right rear air baffle drive portion 161. The at least two air distribution drive structures 147 include a second air distribution drive structure 163 and an air distribution transmission structure 162. The air distribution transmission structure 162 is connected to the left rear air baffle drive portion 160 and the right rear air baffle drive portion 161, and an output end of the second air distribution drive structure 163 is connected to one of the left rear air baffle drive portion 160 and the right rear air baffle drive portion 161. The arrangement of the air distribution transmission structure 162 can drive the left rear air baffle 155 and the right rear air baffle 156 to move by utilizing one second air distribution drive structure 163, which can save costs.

In some embodiments, the air distribution transmission structure 162 includes a transmission rod 164 and at least two mating gears 165. The transmission rod 164 may be cylindrical in shape. The transmission rod 164 extends in the horizontal direction Y perpendicular to the linear direction X. The at least two mating gears 165 are distributed on the transmission rod 164 along the horizontal direction Y. At least one mating gear 165 of the at least two mating gears 165 is in mating connection with the gear 150 of the left rear air baffle drive portion 160, and the rest of the at least two mating gears 165 is in mating connection with the gear 150 of the right rear air baffle drive portion 161. In this embodiment, the number of the mating gears 165 is two, one mating gear 165 is in mating connection with the gear 150 of the left rear air baffle drive portion 160, and the other mating gear 165 is in mating connection with the gear 150 of the right rear air baffle drive portion 161. In this way, the rotation of one of the left rear air baffle drive portion 160 and the right rear air baffle drive portion 161 can simultaneously drive the other one of the left rear air baffle drive portion 160 and the right rear air baffle drive portion 161 to rotate and the corresponding left rear air baffle 155 and the corresponding right rear air baffle 156 to move, resulting in higher efficiency.

In some embodiments, the air distribution assembly 144 includes a first gear set 166 and a second gear set 167. The at least two air baffle drive portions 146 include a front air baffle drive portion 168 and a rear air baffle drive portion 169. The first gear set 166 is connected to the front air baffle drive portion 168, and is configured to drive the front air baffle drive portion 168 to rotate. The second gear set 167 is connected to the rear air baffle drive portion 169, and is configured to drive the rear air baffle drive portion 169 to rotate. The first gear set 166 and the second gear set 167 are arranged to respectively drive the front air baffle drive portion 168 and the rear air baffle drive portion 169 to rotate, thereby ensuring stable rotation.

In some embodiments, the first gear set 166 and the second gear set 167 are arranged in a staggered manner along the horizontal direction Y. The first gear set 166 may include a first gear 170 and a second gear 171 that mesh with each other. The second gear set 167 may include a third gear 173 and a fourth gear 174 that mesh with each other. The staggered arrangement of the first gear set 166 and the second gear set 167 along the horizontal direction Y may mean that the first gear 170 and the second gear 171 may be disposed at a side of the third gear 173 and the fourth gear 174 in the horizontal direction Y. Such arrangement can make the overall structure more compact. An output end of the first air distribution drive structure 159 may be connected to the first gear 170, and the second gear 171 is connected to the front air baffle drive portion 168. An output end of the second air distribution drive structure 163 may be connected to the third gear 173, and the fourth gear 174 is connected to the rear air baffle drive portion 169.

In some embodiments, the rear air baffle drive portion 169 includes a hollow interior, and the front air baffle drive portion 168 passes through the rear air baffle drive portion 169 and is connected to the first gear set 166. In this way, the rotation axis of the second gear 171 and the rotation axis of the fourth gear 174 may coincide, resulting in more compact structure.

In some embodiments, the air distribution drive structure 147 is electrically connected to the controller. The controller is configured to control the output end of the air distribution drive structure 147 to rotate by a corresponding angle according to the mode selection signal, so as to realize that the air baffle 145 moves from an initial position to a corresponding position along the linear direction X. In this way, the controller may control the output end of the air distribution drive structure 147 to rotate by a corresponding angle, enabling the air baffle 145 to move to different positions in the linear direction X, thereby implementing different opening degrees of the first air inlet 18 and the second air inlet 19, and implementing temperature adjustment. For example, the first air inlet 18 may be completely opened, the second air inlet 19 may be completely closed, and only cold air is introduced into the air cavity 16; the first air inlet 18 may be completely closed, the second air inlet 19 may be completely opened, and only hot air is introduced into the air cavity 16; and the first air inlet 18 may be partially opened, the second air inlet 19 may be partially opened, and opening degrees of the first air inlet 18 and the second air inlet 19 may be adjusted.

Referring to FIG. 4 again, in some embodiments, the air distribution apparatus 10 for the vehicle air-conditioner includes a filter 175 disposed in the air cavity 16, and the filter 175 is located between the air inlet side 14 and the plurality of air outlets 20. The filter 175 can be provided to prevent dust and impurities from entering the air inlet 17, thereby protecting the heat exchanger inside the vehicle.

In some embodiments, the air distribution apparatus 10 for the vehicle air-conditioner includes an air baffle duct 176 disposed in the air cavity 16. The air baffle duct 176 includes a ventilation cavity 177, a first vent 178 and a second vent 179, and the first vent 178 and the second vent 179 are in communication with the ventilation cavity 177. The air inlet side 14 is located at one side of the air baffle duct 176, and the comfort air outlet 30 is located at the other side of the air baffle duct 176. The plurality of air outlets 20 include a defrosting air outlet 54, the first vent 178 faces the air inlet side 14, and the second vent 179 faces the defrosting air outlet 54. In this way, at least one of the cold air or the hot air entering the air inlet side 14 may not be directly blown to the air outlet 20, so that the air blown out of the air outlet 20 is more comfortable.

The present disclosure further provides a vehicle, and the vehicle may be a new energy vehicle. The vehicle includes a vehicle body, a front windshield disposed on the vehicle body, and the air distribution apparatus for the vehicle air-conditioner as described above. The air distribution apparatus for the air-conditioner may be disposed in the vehicle body. In some embodiments, the first air guide portion is parallel to the front windshield. The air may be blown obliquely upward inside the vehicle, thereby improving user comfort.

A person skilled in the art will be able to easily conceive of other embodiments of the present disclosure after considering the specification and practice of the present disclosure disclosed herein. The present disclosure is intended to cover any variations, uses or adaptive changes of the present disclosure that follow the general principles of the present disclosure and include common knowledge or customary technical means in the art not disclosed herein. The specification and embodiments are to be regarded as exemplary only, and the actual scope and spirit of the present disclosure are indicated by the appended claims.

It should be understood that the present disclosure is not limited to the specific structures already described above and illustrated in the accompanying drawings, and that various modifications and changes may be made without departing from the scope thereof. The scope of the present disclosure is limited only by the appended claims.

## Claims

1. An air distribution apparatus (10) for a vehicle air-conditioner, comprising:
a housing (11) comprising an air inlet side (14), an air outlet side (15), and an air cavity (16), wherein the air inlet side (14) is provided with an air inlet (17), the air inlet (17) comprises a first air inlet (18) and a second air inlet (19), the first air inlet (18) is configured to communicate the air cavity (16) with a cold air inlet area, and the second air inlet (19) is configured to communicate the air cavity (16) with a hot air inlet area; and
an air distribution assembly (144) disposed at the air inlet side (14), wherein the air distribution assembly (144) comprises an air baffle (145) and an air baffle drive portion (146), and the air baffle (145) is disposed at the air inlet (17) and movably connected to the air baffle drive portion (146) in a linear direction (X),
wherein the air baffle (145) is movably switchable between a first position and a second position,
when the air baffle (145) is in the first position, the air baffle (145) completely blocks the first air inlet (18), and
when the air baffle (145) is in the second position, the air baffle (145) completely blocks the second air inlet (19).

2. The air distribution apparatus (10) for the vehicle air-conditioner according to claim 1, wherein:
the air baffle (145) is provided with a rack (148) on a surface thereof, and the rack (148) extends in the linear direction (X); and
the air baffle drive portion (146) comprises an extension rod (149) and a gear (150), the extension rod (149) extends in a horizontal direction (Y) perpendicular to the linear direction (X), and the gear (150) is disposed on the extension rod (149) and is in mating connection with the rack (148).

3. The air distribution apparatus (10) for the vehicle air-conditioner according to claim 2, wherein:
the air outlet side (15) is provided with a plurality of air outlets (20), and the plurality of air outlets (20) comprise a plurality of front air outlets (21) and a plurality of rear air outlets (22); the plurality of front air outlets (21) are configured to deliver air to a front row inside a vehicle, and the plurality of rear air outlets (22) are configured to deliver the air to a rear row inside the vehicle;
the air cavity (16) comprises a front air cavity (23) and a rear air cavity (24) that are disposed separately from each other, the front air cavity (23) is in communication with the plurality of front air outlets (21) and the air inlet (17), and the rear air cavity (24) is in communication with the plurality of rear air outlets (22) and the air inlet (17); and
the air baffle (145) comprises a front air baffle (151) and a rear air baffle (152), the front air baffle (151) is disposed at a position of the air inlet (17) corresponding to the front air cavity (23), and the rear air baffle (152) is disposed at a position of the air inlet (17) corresponding to the rear air cavity (24).

4. The air distribution apparatus (10) for the vehicle air-conditioner according to claim 3, wherein the air distribution assembly (144) further comprises an air distribution drive structure (147), and the air distribution drive structure (147) comprises an output end connected to the air baffle drive portion (146), to drive the air baffle drive portion (146) to rotate;
the air baffle drive portion (146) comprises a left front air baffle drive portion (157) and a right front air baffle drive portion (158); and
the air distribution drive structure (147) comprises two first air distribution drive structures (159), and the two first air distribution drive structures (159) comprise output ends respectively connected to the left front air baffle drive portion (157) and the right front air baffle drive portion (158), to drive the left front air baffle drive portion (157) and the right front air baffle drive portion (158) to rotate.

5. The air distribution apparatus (10) for the vehicle air-conditioner according to claim 3, wherein the air distribution assembly (144) further comprises an air distribution drive structure (147), and the air distribution drive structure (147) comprises an output end connected to the air baffle drive portion (146), to drive the air baffle drive portion (146) to rotate;
the air baffle drive portion (146) comprises a left rear air baffle drive portion (160) and a right rear air baffle drive portion (161); and
the air distribution drive structure (147) comprises a second air distribution drive structure (163) and an air distribution transmission structure (162), the air distribution transmission structure (162) is connected to the left rear air baffle drive portion (160) and the right rear air baffle drive portion (161), and the second air distribution drive structure (163) comprises an output end connected to one of the left rear air baffle drive portion (160) and the right rear air baffle drive portion (161).

6. The air distribution apparatus (10) for the vehicle air-conditioner according to claim 5, wherein the air distribution transmission structure (162) comprises a transmission rod (164) and at least two mating gears (165), the transmission rod (164) extends along the horizontal direction (Y), and the at least two mating gears (165) are distributed on the transmission rod (164) along the horizontal direction (Y); and
at least one of the at least two mating gears (165) is in mating connection with a gear of the left rear air baffle drive portion (160), and the rest of the at least two mating gears (165) is in mating connection with a gear of the right rear air baffle drive portion (161).

7. The air distribution apparatus (10) for the vehicle air-conditioner according to claim 3, wherein the air distribution assembly (144) further comprises a first gear set (166) and a second gear set (167);
the air baffle drive portion (146) comprises a front air baffle drive portion (168) and a rear air baffle drive portion (169);
the first gear set (166) is connected to the front air baffle drive portion (168) and is configured to drive the front air baffle drive portion (168) to rotate; and
the second gear set (167) is connected to the rear air baffle drive portion (169) and is configured to drive the rear air baffle drive portion (169) to rotate.

8. The air distribution apparatus (10) for the vehicle air-conditioner according to claim 7, wherein the rear air baffle drive portion (169) comprises a hollow interior, and the front air baffle drive portion (168) passes through the rear air baffle drive portion (169) and is connected to the first gear set (166).

9. The air distribution apparatus (10) for the vehicle air-conditioner according to claim 7 or 8, wherein the first gear set (166) and the second gear set (167) are arranged in a staggered manner along the horizontal direction (Y).

10. The air distribution apparatus (10) for the vehicle air-conditioner according to any one of claims 1 to 3, wherein:
the air distribution apparatus (10) for the vehicle air-conditioner further comprises a controller;
the air distribution assembly (144) further comprises an air distribution drive structure (147), and the air distribution drive structure (147) comprises an output end connected to the air baffle drive portion (146), to drive the air baffle drive portion (146) to rotate;
the air distribution drive structure (147) is electrically connected to the controller; and
the controller is configured to control the output end of the air distribution drive structure (147) to rotate by a corresponding angle based on a mode selection signal, so that the air baffle (145) moves from an initial position to a corresponding position along the linear direction (X).

11. A vehicle, comprising:
a vehicle body; and
the air distribution apparatus (10) for the vehicle air-conditioner according to any one of claims 1 to 10, disposed in the vehicle body.
